# EUROPEAN PATENT SPECIFICATION

(11) **EP 1 131 969 B1**
(45) Date of publication and mention of the grant of the patent: **05.09.2007**
(21) Application number: 99958199.4
(22) Date of filing: 19.11.1999
(51) Int. Cl.: H04Q 7/32

(54) **METHOD AND SYSTEM IN A TELECOMMUNICATION SYSTEM AND SUBSCRIBER IDENTITY MODULE**
VERFAHREN UND SYSTEM IN EINEM TELEKOMMUNIKATIONSSYSTEM UND TEILNEHMER IDENTIFIZIERUNGSMODUL
PROCEDE ET SYSTEME UTILISES DANS UN SYSTEME DE TELECOMMUNICATIONS ET MODULE D'IDENTIFICATION D'ABONNE

(30) Priority: 20.11.1998 FI 982519
(43) Date of publication of application: 12.09.2001
(73) Proprietor: SmartTrust Systems Oy, 00051 Sonera (FI)
(72) Inventor: PAAVILAINEN, Petri, FIN-02150 Espoo (FI); HEINONEN, Petteri, FIN-02600 Espoo (FI)
(74) Representative: Simmelvuo, Markku Kalevi
(86) International application number: PCT/FI1999/000962
(87) International publication number: WO 2000/031997

(56) References cited:
- EP-A1- 0 562 890
- WO-A1-94/30023
- WO-A1-97/23104
- WO-A1-97/36437

## Description

### FIELD OF THE INVENTION

The present invention relates to telecommunication technology. In particular, the invention concerns a method and system for dynamic allocation of subscriber identity module memory areas and for distribution of memory areas between operator, service provider and subscriber.

### BACKGROUND OF THE INVENTION

A very essential component regarding the functionality of mobile stations is the subscriber identity module (SIM) connected to the mobile station. In mobile communication systems, e.g. the GSM system (GSM, Global System for Mobile communications), new mobile network applications can be implemented via the subscriber identity module. Conventionally, the subscriber identity module has been used as a storage for subscriber-specific information related to mobile communication networks and information needed for call setup. Functional applications which can be utilized in mobile communication and other activities are loaded on the subscriber identity module. Next-generation mobile stations will place increasing demands on the functionality of the subscriber identity module. At present, the subscriber identity module functions as a component in which the information stored and memory areas defined are fairly static.

A reference WO 9430023 discloses a Subscriber Identity Module (SIM card), wherein each SIM card has fixed memory locations to which data can be addressed over the air. Some of the locations can not be overwritten from the subscriber unit but can be accessed therefrom on the entry of short simple codes, each associated with one of the locations. Further fixed memory locations can be read over the air only when the subscriber enters a personal identification number. Locking control files are used to control read/write access to the locations respectively.

A reference WO 9723104 discloses a device and associated method for automatically transmitting information by way of a radio transceiver responsive to a request for emergency assistance initiated by way of the radio transceiver. Informational data pertaining to a subscriber is stored in a portable memory element, such as a SIM memory card of a cellular, communication system. When entry of a request, such as entry of the digits "9-1-1" for emergency assistance is requested, the informational data is automatically accessed and transmitted to provide emergency personnel with the informational data.

A reference EP 0562890 discloses a communications network comprising a switching network including a mobile switching centre which communicates, e.g. by radio telephony, with mobile equipment, such as a mobile telephone. The mobile equipment contains a subscriber identity module which stores data for controlling the operation of, and the facilities available to the user, of the mobile equipment. In accordance with the present invention, the switching network transmits updating signals to the mobile equipment which alter the data stored in the subscriber identity module, and hence alter the operation on facilities available

A reference WO 9736437 discloses a solution in which an SMS or USSD message encapsulating a request for Subscriber Identity Module stored data is transported to the mobile station over a connection-less communications link such as a Stand-alone Dedicated Control Channel (SDCCH). An application module within the mobile station having access to the SIM card receives the request signal, retrieves the requested information from the SIM card, and retransmits it back to the requesting party. In order to facilitate proper return to the requesting party, if an SMS message is used, a return address is encapsulated into the transmitted SMS message for future reference. The serving mobile switching center (MSC) receives the transmitted message encapsulating the requested subscriber data and routes the received data to the original requesting party.

A problem with the above-mentioned solutions is that applications stored or loaded on the subscriber identity module occupy a fixed, predetermined space in the memory. The size of this predetermined memory space can not be changed except by the operator using special means. This manner of action is inefficient if a short response time for the desired changes is required. A further problem is that the subscriber identity module is entirely the operator's property, so the customer and/or service provider has no chance to place their own applications on the subscriber identity module. Yet another problem is that maintaining a database concerning the memory structures and applications on subscriber identity modules requires a considerable amount of disk capacity and resources.

The object of the present invention is to eliminate the drawbacks referred to above or at least to significantly alleviate them.

A specific object of the invention is to disclose a new type of method and system that will allow dynamic management of the memory of the subscriber identity module. The memory can be managed e.g. by an application stored on the subscriber identity module and/or by the operating system or operator. At the same time, the operator avoids increasing the size of the database concerning the memory structure and applications in the subscriber identity modules as information regarding the subscriber identity module structure and applications can be obtained when necessary. The invention provides the advantage that memory space in the subscriber identity module can be released for use by the customer and/or service provider, and the use of memory space can be controlled dynamically.

As for the features characteristic of the invention, reference is made to the claims.

### BRIEF DESCRIPTION OF THE INVENTION

The method of the invention concerns dynamic allocation of memory space in a subscriber identity module comprised in a mobile station in a telecommunication system. The telecommunication system preferably comprises a management system, a mobile station and a subscriber identity module connected to the mobile station. In the method, the memory space of the subscriber identity module is divided into two or more sections and, moreover, applications are stored in the subscriber identity module.

Dynamic allocation of the memory of the subscriber identity module can be accomplished by the operating system of the subscriber identity module and/or by an application in the memory space. Memory areas can be allocated e.g. for applications used by the operator, a service provider and/or the customer. The program may be seen by the user e.g. as a subscriber identity module memory management application. The user can choose for example how much space is to be allocated for ADN and SMS fields (ADN, Abbreviated Dialing Number; SMS, Short Message Service). The memory management program in the subscriber identity module can manage the memory independently in accordance with certain criteria by increasing or decreasing the file size as necessary. Dynamic allocation of memory areas can also preferably be implemented using an external management system. In practice, this may mean an OTA server (OTA, Over The Air) maintained by the operator and allowing the operator to alter the memory structure of the subscriber identity module. The management system may request the subscriber identity module to transmit information regarding the memory structure of the subscriber identity module and the applications contained in it. In this way, information about the memory structure is obtained when necessary, thus avoiding overloading the operator's database concerning subscriber identity modules.

The system of the invention comprises means for dynamic allocation of the memory of the subscriber identity module for the operator's and/or service provider's and/or subscriber's applications. Moreover, the system comprises means for dynamic allocation of the memory of the subscriber identity module via the operating system of the subscriber identity module and/or an application in its memory space.

Furthermore, the system of the invention comprises means for the management of dynamic memory allocation using an external management system. In addition, the system comprises means for sending information regarding allocation of memory areas to the external management system.

The invention also concerns a subscriber identity module. It comprises a data processing device, a storage device connected to the data processing device and a data transfer device connected to the data processing device. In addition, the subscriber identity module is provided with an interface for data transfer between the mobile station and the subscriber identity module. The memory space of the subscriber identity module is divided into two or more sections and applications are stored in the subscriber identity module.

The subscriber identity module comprises means for dynamic allocation of the memory of the subscriber identity module for operator, service provider and/or subscriber applications.

In addition, the subscriber identity module comprises means for dynamic allocation of the memory of the subscriber identity module via the operating system of the subscriber identity module and/or via an application in its memory space. Furthermore, the subscriber identity module comprises means for transmitting allocation information to the management system.

As compared with prior art, the present invention provides the advantage that it makes it unnecessary to maintain a database containing accurate information about the SIM card of each customer; instead, the subscriber identity module gives information about its memory structure to a server when necessary. A specific advantage provided by the invention is dynamic management of the memory of the subscriber identity module. The card need not be taken to the operator's plant for treatment; instead, the memory is managed via remote maintenance by wireless means or via an application in the subscriber identity module or its operating system.

### LIST OF ILLUSTRATIONS

In the following, the invention will be described in detail by the aid of a few examples of its embodiments, wherein
Fig. 1 represents a preferred telecommunication system according to the invention,
Fig. 2 presents a preferred example of the memory structure of the subscriber identity module,
Fig. 3 presents a preferred example of memory management according to the invention.

### DETAILED DESCRIPTION OF THE INVENTION

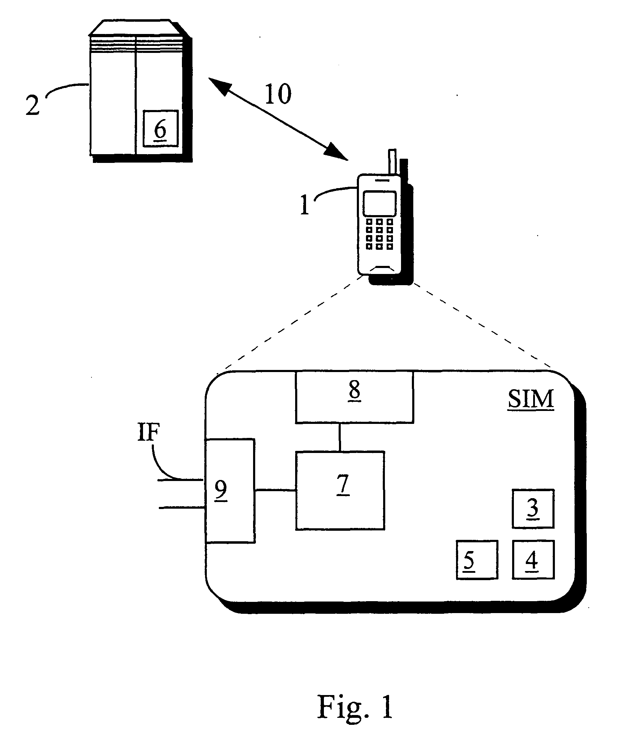

The system presented in Fig. 1 comprises a mobile station 1 and a management system 2. Connected to the mobile station 1 is a subscriber identity module SIM. The management system 2 comprises means 6 for the management of dynamic allocation of memory areas in the subscriber identity module SIM.

A preferred subscriber identity module SIM as presented in Fig. 1 comprises a data processing device 7, a storage device 8 connected to the data processing device 7 and a data transfer device 9 connected to the data processing device 7. In addition, the subscriber identity module SIM is provided with an interface IF for data transfer between the mobile station 1 and the subscriber identity module SIM.

For the signalling between the subscriber identity module and the mobile communication network, a standardized protocol is used. The communication between the mobile station and the management system, arrow 10, can be implemented using e.g. SMS messages or USSD messages (USSD, Unstructured Service Data).

Means 3 - 9 are implemented in a manner known in itself and they will therefore not be described in detail.

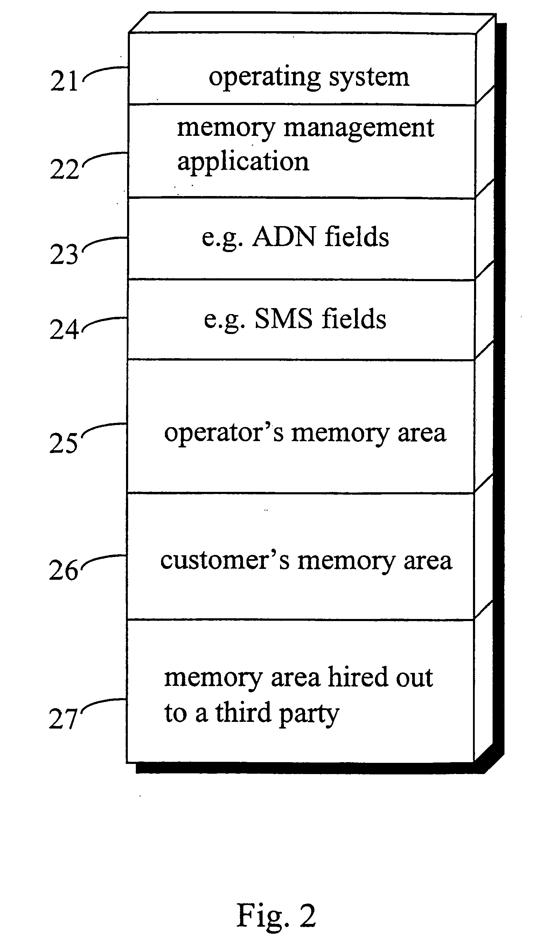

Fig. 2 presents a preferred example of the memory structure of the subscriber identity module. In this example, the structure comprises an operating system 21 controlling the functions of the subscriber identity module. The function of a memory management application 22, as suggested by its name, is to manage the allocation of memory areas for different applications and to transmit information regarding the memory structure to the operator or operating system upon request. The size of the ADN fields 23 and SMS fields 24 can be varied via the memory management application. According to the invention, several different parties may occupy memory areas in the subscriber identity module. In the present example, the parties include, in addition to the operator's memory area 25, a customer's memory area 26 and a memory area 27 occupied by a third party.

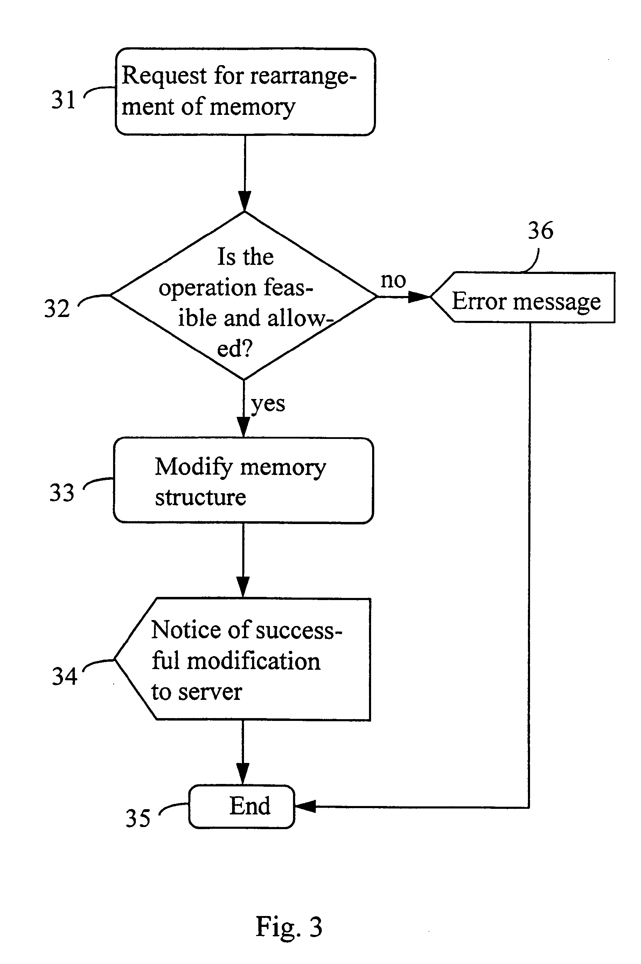

Fig. 3 presents an example of a flow diagram representing a preferred embodiment of memory management according to the invention. In block 31, a request for rearrangement of the memory is received. This request may be originated by either the user, the operator or the subscriber identity module. In block 32, a check is carried out to establish whether the required operation is feasible and allowed. In practice, this may mean checking whether the card has sufficient memory and whether the desired operation is allowed by the operator. If the operation is not allowed, then an error message 36 is issued. Following the error message, the request for rearrangement of memory is aborted 35.

If the operation is feasible and allowed, then the procedure goes on to block 33 and the memory structure is modified as required. After the desired changes have been made, the server is notified of successful modification, block 34, and the modification procedure is ended, block 35.

The invention is not restricted to the examples of its embodiments described above, but many variations are possible within the scope of the inventive idea defined in the claims

## Claims

1. Method for the management of the memory space of a subscriber identity module, SIM, in a telecommunication system comprising a management system (2), a mobile station (1) and the subscriber identity module, SIM, connected to the mobile station (1), in which method the memory space of the subscriber identity module, SIM, is divided into two or more sections and applications are stored in the subscriber identity module, SIM, **characterized in that**
subscriber identity module, SIM, memory is allocated dynamically by assigning memory areas in the subscriber identity module, SIM, for operator, service provider and/or subscriber applications.

2. Method as defined in claim 1, **characterized in that** the subscriber identity module, SIM, memory is allocated dynamically by the operating system of the subscriber identity module, SIM, and/or by an application in its memory space.

3. Method as defined in claim 1 or 2, **characterized in that** dynamic allocation of memory areas is managed by the management system (2) which is external to the mobile station (1).

4. Method as defined in claims 1 - 3, **characterized in that** information regarding allocation of memory areas is transmitted to the management system (2) which is external to the mobile station (1).

5. System for the management of the memory space of a subscriber identity module, SIM, of a mobile station (1) in a telecommunication system comprising a management system (2), a mobile station (1) and the subscriber identity module, SIM, connected to the mobile station (1), in which system the memory space of the subscriber identity module, SIM, is divided into two or more sections and applications are stored in the subscriber identity module, SIM, **characterized in that** the system comprises
means (3) for dynamic allocation of the memory of the subscriber identity module, SIM, for operator, service provider and/or subscriber applications.

6. System as defined in claim 5, **characterized in that** the system comprises means (4) for dynamic allocation of the memory of the subscriber identity module, SIM, via the operating system of the subscriber identity module, SIM, and/or an application in its memory space.

7. System as defined in claims 5 and 6, **characterized in that** the system comprises means (5) for transmitting information regarding allocation of memory areas to the management system (2) which is external to the mobile station (1).

8. System as defined in claims 5 - 7, **characterized in that** the system comprises means (6) for the management of dynamic allocation of memory areas by the management system (2) which is external to the mobile station (1).

9. Subscriber identity module, SIM, comprising a data processing device (7), a storage device (8) connected to the data processing device (7) and a data transfer device (9) connected to the data processing device (7) and provided with an interface (IF) for the transfer of information between the mobile station (1) and the subscriber identity module, SIM, wherein memory space of the subscriber identity module, SIM, is divided into two or more sections and applications are stored in the subscriber identity module, SIM, **characterized in that** the subscriber identity module, SIM, comprises
means (3) for dynamic allocation of memory in the subscriber identity module, SIM for operator, service provider and/or subscriber applications.

10. Subscriber identity module, SIM, as defined in claim 9, **characterized in that** the subscriber identity module, SIM, comprises means (4) for dynamic allocation of memory in the subscriber identity module, SIM, via the operating system of the subscriber identity module, SIM, and/or an application in its memory space.

11. Subscriber identity module, SIM, as defined in claims 9 and 10, **characterized in that** the subscriber identity module, SIM, comprises means (5) for transmitting information regarding allocation of memory areas to a management system (2) which is external to the mobile station (1).

## Patentansprüche

1. Verfahren für das Management des Speicherplatzes eines Teilnehmeridentitätsmoduls SIM in einem Telekommunikationssystem mit einem Managementsystem (2), einer Mobilstation (1) und dem Teilnehmeridentitätsmodul SIM, das mit der Mobilstation (1) verbunden ist, wobei der Speicherplatz des Teilnehmeridentitätsmoduls SIM in zwei oder mehr Abschnitte unterteilt ist und Anwendungen in dem Teilnehmeridentitätsmodul SIM gespeichert sind, **dadurch gekennzeichnet, dass**
Speicher des Teilnehmeridentitätsmoduls SIM dynamisch zugewiesen wird, indem Speicherbereiche in dem Teilnehmeridentitätsmodul SIM Bedienperson-, Serviceprovider- und/oder Teilnehmeranwendungen zugewiesen werden.

2. Verfahren nach Anspruch 1, **dadurch gekennzeichnet, dass** der Speicher des Teilnehmeridentitätsmoduls SIM Speicher dynamisch von dem Betriebssystem des Teilnehmeridentitätsmoduls SIM und/oder von einer Anwendung in seinem Speicherplatz zugewiesen wird.

3. Verfahren nach Anspruch 1 oder 2, **dadurch gekennzeichnet, dass** eine dynamische Zuordnung von Speicherbereichen von dem Managementsystem (2) verwaltet wird, das sich außerhalb der Mobilstation (1) befindet.

4. Verfahren nach den Ansprüchen 1 bis 3, **dadurch gekennzeichnet, dass** Information, die eine Zuordnung von Speicherbereichen betrifft, zu dem Managementsystem (2) übertragen wird, das sich außerhalb der Mobilstation (1) befindet.

5. System für die Verwaltung des Speicherplatzes eines Teilnehmeridentitätsmoduls SIM einer Mobilstation (1) in einem Telekommunikationssystem mit einem Managementsystem (2), einer Mobilstation (1) und dem Teilnehmeridentitätsmodul SIM, das mit der Mobilstation (1) verbunden ist, wobei der Speicherplatz des Teilnehmeridentitätsmoduls SIM in zwei oder mehr Abschnitte unterteilt ist und Anwendungen in dem Teilnehmeridentitätsmodul SIM gespeichert sind, **dadurch gekennzeichnet, dass** das System umfasst
eine Einrichtung (3) zur dynamischen Zuordnung des Speichers des Teilnehmeridentitätsmoduls SIM zu Bedienperson-, Serviceprovider- und/oder Teilnehmeranwendungen.

6. System nach Anspruch 5, **dadurch gekennzeichnet, dass** das System eine Einrichtung (4) umfasst, um den Speicher des Teilnehmeridentitätsmoduls SIM über das Betriebssystem des Teilnehmeridentitätsmoduls SIM und/oder einer Anwendung in seinem Speicherplatz dynamisch zuzuordnen.

7. System nach Anspruch 5 und 6, **dadurch gekennzeichnet, dass** das System eine Einrichtung (5) umfasst, um Information, die eine Zuordnung von Speicherbereichen betrifft, zu dem Managementsystem (2) übertragen, das sich außerhalb der Mobilstation (1) befindet.

8. System nach den Ansprüchen 5 bis 7, **dadurch gekennzeichnet, dass** das System eine Einrichtung (6) für die Verwaltung dynamischer Zuordnung von Speicherbereichen durch das Managementsystem (2) umfasst, das sich außerhalb der Mobilstation (1) befindet.

9. Teilnehmeridentitätsmodul SIM mit einer Datenverarbeitungsvorrichtung (7), einer Speichervorrichtung (8), die mit der Datenverarbeitungsvorrichtung (7) verbunden ist, und einer Datenübertragungsvorrichtung (9), die mit der Datenverarbeitungsvorrichtung (7) verbunden ist und mit einer Schnittstelle (IF) für die Übertragung von Information zwischen der Mobilstation (1) und dem Teilnehmeridentitätsmodul SIM ausgestattet ist, wobei Speicherplatz des Teilnehmeridentitätsmoduls SIM in zwei oder mehr Abschnitte unterteilt ist und Anwendungen in dem Teilnehmeridentitätsmodul SIM gespeichert sind, **dadurch gekennzeichnet, dass** das Teilnehmeridentitätsmodul SIM umfasst
eine Einrichtung (3) zur dynamischen Zuordnung von Speicher in dem Teilnehmeridentitätsmodul SIM zu Bedienperson-, Serviceprovider- und/oder Teilnehmeranwendungen.

10. Teilnehmeridentitätsmodul SIM nach Anspruch 9, **dadurch gekennzeichnet, dass** das Teilnehmeridentitätsmodul SIM eine Einrichtung(4) umfasst, um Speicher in dem Teilnehmeridentitätsmodul SIM über das Betriebssystem des Teilnehmeridentitätsmoduls und/oder eine Anwendung in seinem Speicherplatz dynamisch zuzuordnen.

11. Teilnehmeridentitätsmodul SIM nach den Ansprüchen 9 und 10, **dadurch gekennzeichnet, dass** das Teilnehmeridentitätsmodul SIM eine Einrichtung (5) umfasst, um Information, die eine Zuordnung von Speicherbereichen betrifft, zu einem Managementsystem (2) zu übertragen, das sich außerhalb der Mobilstation (1) befindet.

## Revendications

1. Procédé pour la gestion de l'espace mémoire d'un module d'identification d'abonné, SIM, dans un système de télécommunications comprenant un système de gestion (2), une station mobile (1) et le module d'identification d'abonné, SIM, étant connecté à la station mobile (1), dans lequel procédé l'espace mémoire du module d'identification d'abonné, SIM, est divisé en deux sections, ou plus, et des applications sont stockées dans le module d'identification d'abonné, SIM, **caractérisé en ce que**
La mémoire du module d'identification d'abonné, SIM, est affectée dynamiquement en attribuant des zones de mémoire dans le module d'identification d'abonné, SIM, pour des applications d'opérateur, de fournisseur de services et/ou d'abonné.

2. Procédé selon la revendication 1, **caractérisé en ce que** la mémoire du module d'identification d'abonné, SIM, est affectée dynamiquement par le système d'exploitation du module d'identification d'abonné, SIM, et/ou par une application dans son espace mémoire.

3. Procédé selon la revendication 1 ou 2, **caractérisé en ce que** l'affectation dynamique des zones de mémoire est gérée par le système de gestion (2) qui est extérieur à la station mobile (1).

4. Procédé selon les revendications 1 à 3, **caractérisé en ce que** des informations concernant l'affectation de zones de mémoire sont transmises au système de gestion (2) qui est extérieur à la station mobile (1).

5. Système de gestion de l'espace mémoire d'un module d'identification d'abonné, SIM, d'une station mobile (1) dans un système de télécommunications comprenant un système de gestion (2), une station mobile (1) et le module d'identification d'abonné, SIM, connecté à la station mobile (1), dans lequel système l'espace mémoire du module d'identification d'abonné, SIM, est divisé en deux sections, ou plus, et des applications sont stockées dans le module d'identification d'abonné, SIM,
**caractérisé en ce que** le système comprend un moyen (3) pour l'affectation dynamique de la mémoire du module d'identification d'abonné, SIM, pour des applications d'opérateur, de fournisseur de services et/ou d'abonné.

6. Système selon la revendication 5, **caractérisé en ce que** le système comprend un moyen (4) pour l'affectation dynamique de la mémoire du module d'identification d'abonné, SIM, via le système d'exploitation du module d'identification d'abonné, SIM, et/ou une application dans son espace mémoire.

7. Système selon la revendication 5 ou 6, **caractérisé en ce que** le système comprend un moyen (5) pour transmettre des informations concernant l'affectation de zones de mémoire au système de gestion (2) qui est extérieur à la station mobile (1).

8. Système selon les revendications 5 à 7, **caractérisé en ce que** le système comprend un moyen (6) pour la gestion d'affectation dynamique de zones de mémoire par le système de gestion (2) qui est extérieur à la station mobile (1).

9. Module d'identification d'abonné, SIM, comprenant un dispositif de traitement de données (7), un dispositif de stockage (8) connecté au dispositif de traitement de données (7) et un dispositif de transfert de données (9) connecté au dispositif de traitement de données (7) et doté d'une interface (IF) pour le transfert d'informations entre la station mobile (1) et le module d'identification d'abonné, SIM, dans lequel l'espace mémoire du module d'identification d'abonné, SIM, est divisé en deux sections, ou plus, et des applications sont stockées dans le module d'identification d'abonné, SIM, **caractérisé en ce que** le module d'identification d'abonné, SIM, comprend
un moyen (3) pour l'affectation dynamique de la mémoire dans le module d'identification d'abonné, SIM, pour des applications d'opérateur, de fournisseur de services et/ou d'abonné.

10. Module d'identification d'abonné, SIM, selon la revendication 9, **caractérisé en ce que** le module d'identification d'abonné, SIM, comprend un moyen (4) pour l'affectation dynamique de mémoire du module d'identification d'abonné, SIM, via le système d'exploitation du module d'identification d'abonné, SIM, et/ou une application dans son espace mémoire.

11. Module d'identification d'abonné, SIM, selon les revendications 9 et 10, **caractérisé en ce que** le module d'identification d'abonné, SIM, comprend un moyen (5) pour transmettre des informations concernant l'affectation de zones de mémoire à un système de gestion (2) qui est extérieur à la station mobile (1).
